# EUROPÄISCHE PATENTSCHRIFT

(11) **EP 0 421 051 B1**
(45) Veröffentlichungstag und Bekanntmachung des Hinweises auf die Patenterteilung: **04.05.1994**
(21) Anmeldenummer: 90108606.6
(22) Anmeldetag: 08.05.1990
(51) Int. Cl.: H02K 7/102, F16D 59/02

(54) **Ruhestrombremse**
Zero current brake
Frein à manque de courant

(30) Priorität: 12.05.1989 DE 3915561
(43) Veröffentlichungstag der Anmeldung: 10.04.1991
(73) Patentinhaber: PLANUNGS- UND INGENIEURBÜRO GISELA JURISCH - UHLENHAUT, 25856 Hattstedtermarsch (DE)
(72) Erfinder: Jurisch, Klaus, D-2251 Hattstedtermarsch (DE)

(56) Entgegenhaltungen:
- US-A- 4 290 514
- US-A- 4 567 972
- "Betriebsanweisung für Federdruck-Einscheibenbremsen 76..EA,..GA,..NA,..PA" Fa. Binder Magnete GmbH, 7730 VillingenSchwenningen

## Beschreibung

Die Erfindung betrifft eine Ruhestrombremse an der Gegenantriebsseite von Electromotoren mit den Merkmalen im Oberbegriff des Anspruchs 1. Eine solche Bremse ist in DE-AS 11 30 521 beschrieben.

Da eine nicht gelüftete Bremse bei eingeschaltetem Motor durch die Wärmeentwicklung an der Reibfläche große Schäden verursachen kann, wird die Bereitstellung eines Signals für die Lage der Ankerplatte gewünscht.

In einer bekannten Ausführung (Fa. Binder Magnete GmbH, 7730 Villingen-Schwenningen, Betriebsanweisung 76..EA, ..GA, ..NA, ..PA - Federdruck-Einscheibenbremsen mit Explosionsschutz oder Schlagwetterschutz) ist für die Anzeige des Zustandes der gelüfteten Bremse ein durch die Ankerplatte betätigter Mikroschalter vorgesehen. Eine solche Einrichtung wird ferner in der Druckschrift "Bremsmotoren", Best. Nr. 411.2/515, der Fa. Siemens AG angegeben.

Zusätzlich zu der Anzeige des Lüftungszustandes der Bremse ist gefordert, daß der Luftspalt zwischen Magnetspule und Ankerplatte ein Grenzmaß nicht übersteigt, und daß des Erreichen dieses Grenzmaßes angezeigt wird, damit die Bremsscheibe entsprechend nachgestallt werden kann.

Drittens ist gefordert, daß für die völlige Abnutzung der Reibscheibe ein Signal zur Verfügung steht. In DE-AS 10 21 463 wird eine Bremse beschrieben, bei der vorgesehen ist, daß beim Erreichen eines kritischen Abnutzungswertes der Bremsbeläge ein Mikroschalter betätigt wird,

Der Erfindung liegt die Aufgabe zugrunde, eine Bremse der eingangs beschriebenen Art anzugeben, bei der in einfacher Weise Signale für die

Anzeige sämtlicher beschriebenen Zustände der Bremse herleitbar sind, nämlich für den Zustand der gelüfteten Bremse, für den Zustand, daß der Luftspalt zwischen Ankerplatte und Magnetspule ein Grenzmaß erreicht hat und für den Zustand der völligen Abnutzung der Reibscheibe.

Erfindungsgemäß wird diese Aufgabe die Merkmale des kennzeichnenden Teils des Anspruchs 1 gelöst. Weitere Ausgestaltungen der Erfindung sind im den abhängigen Ansprüchen angegeben.

Die Auswertung dieser Zustände ist über die Messung des elektrischen Widerstands zwischen Ankerplatte und Spulengehäuse vorgesehen. Hierzu ist die Ankerplatte mit einem gegen das Spulengehäuse elektrisch isolierten, von der Ankerplattenbewegung entkoppeltem Raumpunkt elektrisch leitend verbunden.

In einer nicht dergestellten elektrischen Schaltung können Widerstandswerten, die kleiner als ein Schwellenwert sind, der Zustand "Kontakt geschlossen", über einem Schwellenwert liegenden der Zustand "Kontakt offen" zugeordnet werden.

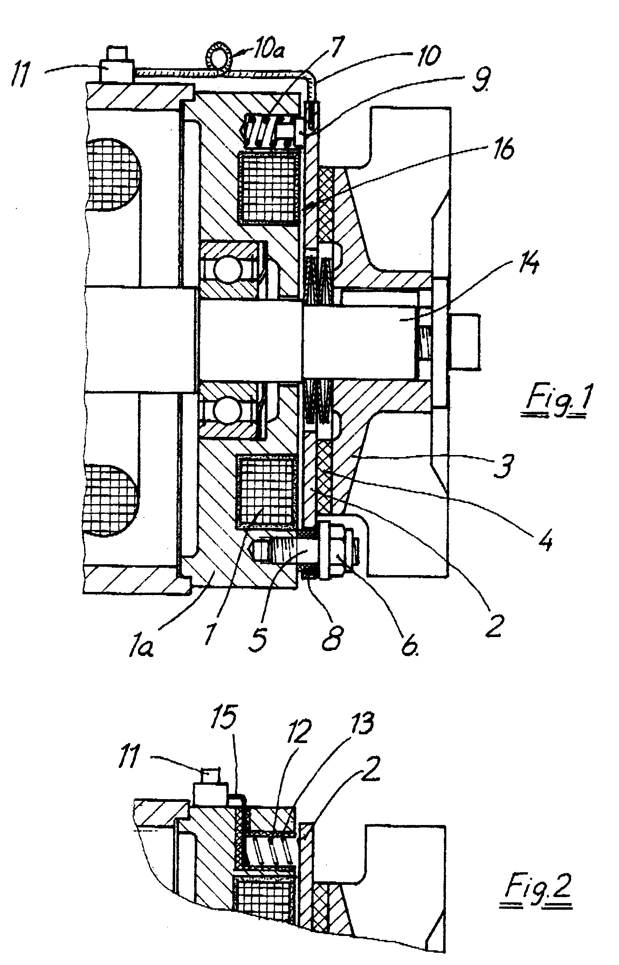

Ein Ausführungsbeispiel des Erfindungsgegenstandes ist in Fig. 1 im Schnitt dargestellt und wird im folgenden näher beschrieben.

Die Ruhestrombremse besteht aus der Magnetspule (1), die in das Spulengehäuse (1a) eingelassen ist, der Ankerplatte (2), der Bremsscheibe (3), die mit der Motorwelle (14) verbunden ist, der an der Bremsscheibe befestigten Reibscheibe (4), den die Drehung der Ankerplatte verhindernden Momentenstützen (5), Begrenzungsstücken (6), die den Luftspalt (16) auf ein maximales Maß begrenzen, Druckfedern (7), die die Ankerplatte gegen die Reibscheibe drücken, wenn die Magnetspule nicht erregt ist, den Führungsstücken (8), die die Ankerplatte erfindungsgemäß von den Momentenstützen elektrisch isolieren, die ihrerseits leitend mit dem Spulengehäuse verbunden sind, einer Leitung (10) zwischen Ankerplatte (2) und Klemme (11), die den von der Ankerplattenbewegung entkoppelten Raumpunkt darstellt, an dem der Widerstand zum Spulengehäuse gemessen werden kann.

Um die Klemme (11) von der Ankerplattenbewegung zu entkuppeln, weist die Leitung (10) einen flexiblen Abschnitt (10a) auf.

Eine Variante der Verbindung zwischen Ankerplatte (2) und Klemme (11) ist in Fig. 2 in einem Ausschnitt dargestellt.

Die leitende Verbindung wird hier über eine Druckfeder (12) auf ein mit der Klemme verbundenes Leitplättchen (15) hergestellt.

Druckfeder und Leitplättchen sind gegen das Spulengehäuse durch eine Isolierung (13) isoliert.

Die Bremse arbeitet ordnungsgemäß, wenn der elektrische Widerstand zwischen Ankerplatte und Spulengehäuse bei nicht erregter Magnetspule groß, bei erregter Magnetspule klein ist.

Ist bei erregter Magnetspule der elektrische Widerstand zwischen Ankerplatte und Spulengehäuse groß, hat die ßremse nicht gelüftet, und der Motor darf nicht angelassen werden.

Kleiner Widerstand bei nicht erregter Magnetspule signalisiert, daß die Reibscheibe so weit verbraucht ist, daß der Luftspalt seine maximale Dicke erreicht hat. Die Bremsscheibe muß nachgestellt werden.

Ist auch nach Nachstellung der Bremsscheibe der Widerstand bei nicht erregter Magnetspule klein, ist die Reibscheibe verbraucht.

## Patentansprüche

1. Ruhestrombremse an der Gegenantriebsseite von Elektromotoren, bestehend aus einem mit dem Motorgestell verbundenen Spulengehäuse (1a), in das eine Magnetspule eingelassen ist, einer mit der Motorwelle (14) verbundenen Bremsscheibe (3) und einer zwischen Magnetspule (1) und Bremsscheibe in Richtung der Motorwelle längsbeweglichen, gegen Drehung abgestützten Ankerplatte (2), die bei nicht erregter Magnetspule durch einen Luftspalt vom Spulengehäuse getrennt ist und sich durch Federkraft über eine zwischen ihr und der Bremsscheibe befindliche Reibscheibe (4) gegen die Bremsscheibe abstützt,
dadurch gekennzeichnet,
daß die Ankerplatte (2) bei nicht erregter Magnetspule gegen das Spulengehäuse (1a) elektrisch isoliert, bei erregter Magnetspule mit diesem elektrisch leitend verbunden ist, und daß die Ankerplatte mit einem gegen das Spulengehäuse elektrisch isolierten, von der Ankerplattenbewegung entkoppelten Raumpunkt elektrisch leitend verbunden ist.

2. Ruhestrombremse nach Anspruch 1, dadurch gekennzeichnet, daß die Ankerplatte (2) bei nicht erregter Magnetspule dann mit dem Spulengehäuse (1a) elektrisch leitend verbunden ist, wenn der Luftspalt (16) die maximal zulässige Dicke erreicht hat.

3. Ruhestrombremse nach Anspruch 1, dadurch gekennzeichnet, daß die Ankerplatte (2) bei nicht erregter Magnetspule dann mit dem Spulengehäuse (1a) elektrisch leitend verbunden ist, wenn die Reibscheibe (4) verschlissen ist.

4. Ruhestrombremse nach Anspruch 1, dadurch gekennzeichnet, daß die Isolierung gegen das Spulengehäuse durch mindestens zwei isolierende Führungsstücke (8) zwischen Ankerplatte (2) und Momentenstützen (5), sowie durch Isolierstücke (9) an den Enden der Druckfedern (7) bewerkstelligt wird.

5. Ruhestrombremse nach Anspruch 1, dadurch gekennzeichnet, daß die Reibscheibe (4) in ihrem für den Verschleiß vorgesehenen Dickenbereich aus elektrisch isolierendem Material besteht.

6. Ruhestrombremse nach den Ansprüchen 1 bis 5, dadurch gekennzeichnet, daß die elektrisch leitende Verbindung zwischen der Ankerplatte und dem von deren Bewegung entkoppeltem Raumpunkt aus einer Leitung (10) mit mindestens einem flexiblen Abschnitt (10a) und einer zum Spulengehäuse (1a) ortsfesten Klemme (11), die den Raumpunkt verkörpert, besteht.

7. Ruhestrombremse nach Anspruch 6. dadurch gekennzeichnet, daß die Leitung (10) aus einem Leitplättchen (15) und einer elektrisch leitenden, sich am Spulengehäuse und an der Ankerplatte abstützenden Druckfeder (12) besteht, die vom Spulengehäuse durch eine Isolierung (13) getrennt sind.

## Claims

1. Zero-current brake on the non-drive end of electric motors, consisting of a coil housing (1a) connected to the motor frame, with a magnet coil embedded in said coil housing, and comprising a brake disk (3) connected to the motor shaft (14) and a retaining plate (2) disposed between said magnet coil (1) and said brake disk (3), supported against rotation and movable in a longitudinal direction towards said motor shaft, which, when the magnet coil is not excited, is separated from said coil housing by an air gap and which is resiliently supported against the brake disk via a friction disk (4) located between it and said brake disk,
characterised in that
the retaining plate (2) is electrically insulated towards the coil housing (1a) when the magnet coil is not excited, and, when the magnet coil is excited, is connected thereto in an electrically conductive manner, and that said retaining plate is connected in an electrically conductive manner to a centre point that is electrically insulated towards the coil housing and is decoupled from the movement of said retaining plate.

2. Zero-current brake as claimed in Claim 1, characterised in that, when the magnet coil is not excited, the retaining plate (2) is connected in an electrically conductive manner to the coil housing (1a) whenever the air gap (16) has reached its maximum thickness.

3. Zero-current brake as claimed in Claim 1, characterised in that, when the magnet coil is not excited, the retaining plate (2) is connected in an electrically conductive manner to the coil housing (1a) whenever the friction disk (4) is worn.

4. Zero-current brake as claimed in Claim 1, characterised in that the insulation towards the coil housing is assured by at least two insulating guide members (8) between the retaining plate (2) and torque supports (5), and by insulating elements (9) on the ends of pressure springs (7).

5. Zero-current brake as claimed in Claim 1, characterised in that the friction disk (4) consists of electrically insulating material in the thick region thereof intended for wear.

6. Zero-current brake as claimed in any of Claims 1 to 5, characterised in that the electrically conductive connection between the retaining plate and the centre point decoupled from the movement thereof consists of a lead (10) with at least one flexible portion (10a) and a terminal (11), which constitutes the centre point and which is stationary relative to said coil housing (1a).

7. Zero-current brake as claimed in Claim 6, characterised in that the lead (10) consists of a small conductive plate (15) and an electrically conductive pressure spring (12) supported on the coil housing and the retaining plate, said pressure spring (12) being separated from the coil housing by an insulating element (13).

## Revendications

1. Frein à manque de courant sur le côté opposé à l'entraînement des moteurs électriques, comprenant une boîte de bobine (1a) solidaire du châssis du moteur, dans laquelle une bobine d'électro-aimant (1) est noyée, un disque de frein (3) solidaire de l'arbre du moteur (14) et une plaque d'induit (2) déplaçable longitudinalement entre la bobine d'électro-aimant et le disque de frein dans le sens de l'arbre du moteur, supportée pour empêcher sa rotation, qui est séparée de la boîte de la bobine par un entrefer lorsque la bobine d'électro-aimant n'est pas excitée et qui s'appuie par élasticité contre le disque de frein au moyen d'un plateau de friction (4) intercalé entre elle et le disque de frein, caractérisé en ce que la plaque d'induit (2) est isolée électriquement de la boîte de la bobine (1a) lorsque la bobine d'électro-aimant n'est pas excitée, en ce qu'elle présente une liaison électroconductrice avec celle-ci lorsque la bobine d'électro-aimant est excitée et en ce que la plaque d'induit présente une liaison électroconductrice avec un point dans l'espace isolé électriquement de la boîte de la bobine et découplé du mouvement de la plaque d'induit.

2. Frein à manque de courant selon la revendication 1, caractérisé en ce que la plaque d'induit (2), lorsque la bobine d'électro-aimant n'est pas excitée, présente une liaison electroconductrice avec la boîte de la bobine (1a) lorsque l'entrefer (16) a atteint l'épaisseur maximale admissible.

3. Frein à manque de courant selon la revendication 1, caractérisé en ce que la plaque d'induit (2), lorsque la bobine d'électro-aimant n'est pas excitée, présente une liaison électroconductrice avec la boîte de la bobine (1a) lorsque le plateau de friction est usé.

4. Frein à manque de courant selon la revendication 1, caractérisé en ce que l'isolement de la boîte de la bobine est réalisé par au moins deux éléments de guidage (8) intercalés entre la plaque d'induit (2) et la bague de contre-réaction (9), ainsi que par des éléments isolants (9) aux extrémités des ressorts de pression (7).

5. Frein à manque de courant selon la revendication 1, caractérisé en ce que le plateau de friction (4) se compose de matériau isolant électriquement dans sa gamme d'épaisseur prévue pour l'usure.

6. Frein à manque de courant selon les revendications 1 à 5, caractérisé en ce que la liaison électroconductrice entre la plaque d'induit et le point de l'espace découplé de son déplacement est constituée d'une ligne (10) comportant au moins une section flexible (10a) et une borne (11) fixe par rapport à la boîte de la bobine (1a), qui représente le point dans l'espace.

7. Frein à manque de courant selon la revendication 6, caractérisé en ce que la ligne (10) est constituée d'une plaquette conductrice (15) et d'un ressort de pression (12) électroconducteur en appui sur la boîte de la bobine et sur la plaque d'induit, qui est séparé de la boîte de la bobine par un isolement (13).
